# EUROPEAN PATENT APPLICATION

(11) **EP 1 396 825 A1**
(43) Date of publication of application: **10.03.2004**
(21) Application number: 02024674.0
(22) Date of filing: 05.11.2002
(51) Int. Cl.: G07F 9/02, G07F 17/32

(54) **An advertising device for use on product or service dispensing machines, method for delivering prizes from dispensing machines by the use of said device and method for actuating said device**

(30) Priority: 04.09.2002 AR 0203335
(71) Applicant: Dionisio Reobasco, José Maria, C1205AAE Buenos Aires (AR); Lazaga, Ezequiel Roberto, CP C1225ABO Buenos Aires (AR)
(72) Inventor: Dionisio Reobasco, José Maria, C1205AAE Buenos Aires (AR); Lazaga, Ezequiel Roberto, CP C1225ABO Buenos Aires (AR)
(74) Representative: Maldonado Jordan, Julia

(57) **Abstract**

An advertising device for use on product and /or service dispensing machines, meted for delivering prizes in dispensing machines by the use of the said device and meted for actuating the said device. The advertising device is applicable on machines for dispensing products, such as food, beverages and the like or services such as telephony, etc. The device is characterized by comprising a prize viewing means, at least an actuating means and a dispensing slot, where said actuating means is defined by a push button and the device further comprises and actuating cycle comprising a random routine for delivering prizes.

## Description

This invention refers to an advertising device for use in machines dispensing products and/or services, a method for delivering prices in dispensing machines by the use of said device, and method for actuating said device. The present invention preferably refers to a gaming device which can be combined with said product dispensing machines, such as machines dispensing food, beverages, and the like.

It is widely known that there exist machines dispensing various products, such as food, beverages, and the like. Generally said dispensing machines are located in public places, such as hospitals, fuel stations, train stations, etc. The operation of said machines is basic, since, only by inserting the money corresponding to the product displayed, selecting the same, either by a push button or by a key, the machines is then operated, either mechanically, electronically, pneumatically or by a combination thereof, so as to dispense the selected product. Some machines comprise slight variations, such as first selecting the product and then inserting the money.

On the other hand, machines are known which deliver prizes in exchange for an amount of money inserted, for example, machines generally located at entertainment parks and game premises. Said machines are operated in a manner similar to dispensing machines, since an amount is inserted in exchange for an expected result. The main difference between said dispensing machines and machines delivering prizes is that the latter are based on an initial configuration for the delivery of prizes, wherein such configuration is predetermined by the owner of the machine in order to deliver prizes on a pretended randomly basis.

To date no machines are known which combine product dispensing machines with prize delivering machines, so that at the moment of acquiring a product from a dispensing machine, users can chose to participate or not in a game to acquire a prize.

Therefore, is it an object of this invention to provide an advertising device for use in dispensing machines which allows the user to acquire a selected product and also to participate in a raffle-like game to get a prize.

For that reason, it is a further object of this invention to provide an advertising device for use on dispensing machines which will allow users to acquire the selected product and also to participate in a game.

It is therefor an object of this invention to provide an advertising device for use on product dispensing machines, such as food and beverages dispensing machines, where the device comprises a means for viewing the prizes, at least an actuating means and a dispensing slot, said actuating means being defined by a push button , and the device further comprising an actuating cycle including a random routine for delivering prizes.

For the better understanding of the object of this present invention, the same has been illustrated by several figures, which represent one of the preferred embodiments of the invention, as an example, and wherein:
Figure 1 is a front view of the device being the object of this present invention;
Figure 2 shows the initial configuration of the device of Figure 1;
Figure 3 shows the prize statistics of the device of Figure 1;
Figure 4 is a flow chart of the operations of the device being the object of this invention;
Figure 5 is an example of use of the device as attached to a food dispensing machine; and
Figure 6 is an alternative embodiment of the use of the device, which is in this case applied on a public telephone.

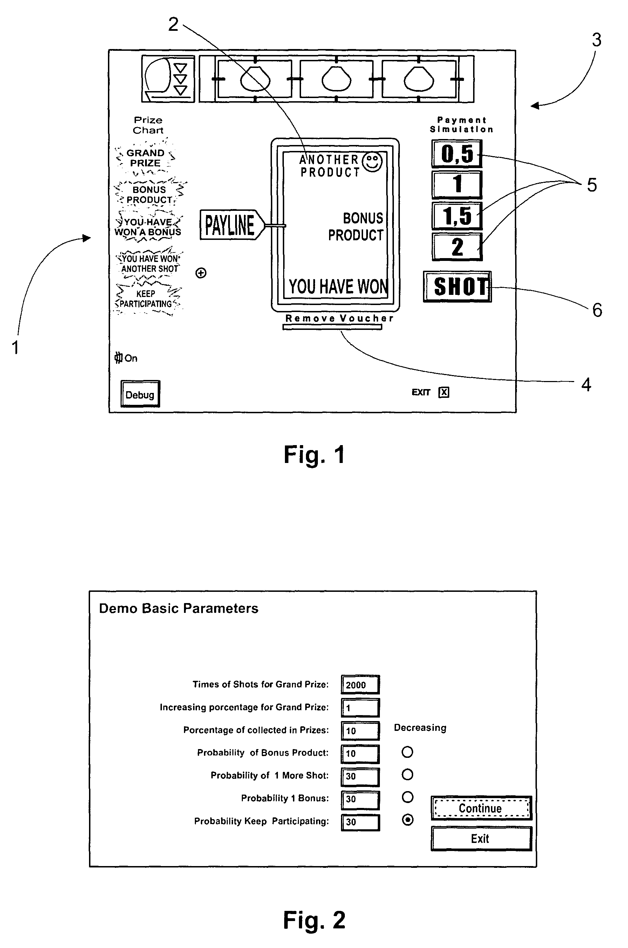

Figure 1 shows the advertising device being the object of this invention and generally referred to as 1, which comprises a prize viewing means 2, an actuating means 3 and a dispensing slot 4, said prize viewing means 2 being a LCD displayer, while actuating means 3 is defined by at least a push button 5. Said push button 5 represents a push button which actuates device 1.

In this particular embodiment, the device 1 is commanded by an algorithm. Said algorithm performs the drawing by lots according to an initial configuration. In fact, and with reference to Figure 2, the program controlling device 1 starts the configuration of parameters. Said parameters define the results obtained by device 1 according to the selecting option. As shown is said Figure 2, the fields to be configured are in this case those related to the frequency with which prizes are given.

Once initial parameters are configured, the program starts the device, such as shown in Figure 1. The basic operation of device 1 is started by selecting one of the products arranged within the dispensing machine. The prize-displaying screen 2 shows a simulated movement resembling that made by slot machines, and which will be stopped by the algorithm control at some of the indicated prizes. It is to be noted that said simulated movement can be replaced by any other device, either mechanical or digital, representing some kind of raffle game, such as a rotating ball which is then stopped at a point or the like, in a mechanical pattern or a digital representation thereof on a LCD screen, such as in this present case. Depending on the option indicated by the raffling device, the user can play again or not, or can take a prize or not. It is to be further noted that the prize can be printed on a ticket dispensed by said slot 4.

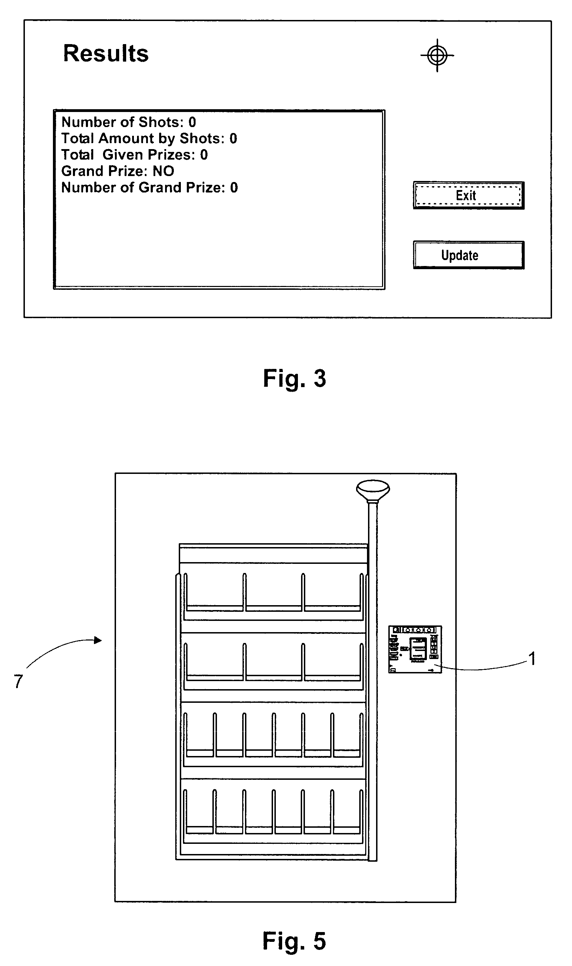

With reference now to Figure 3, device 1 also comprises an option for viewing results, which helps to keep a statistical control and to adjust the number of prizes delivered in relation with use of said device 1. Said option is not shown to the user in general, but, instead, only maintenance staff has access thereto.

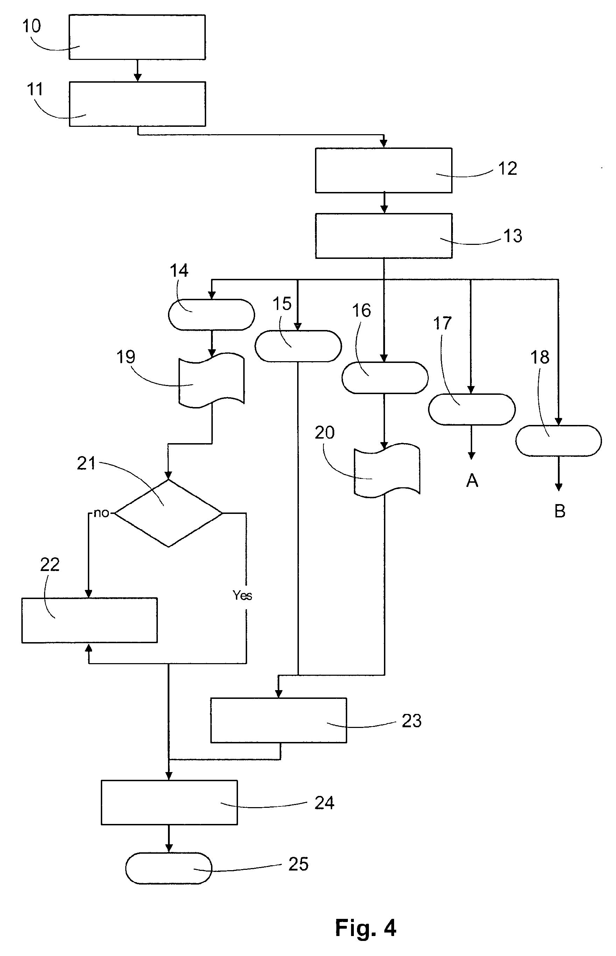

Regarding Figure 4, the same shows a flow chart representing the interaction of device 1 with dispensing machine 7. In fact, the cycle starts in chart 10, where the money is inserted and the product is then selected in chart 11. It is to be noted that these two steps can be alternated depending on the kind of dispensing machine in use. Further to step 11, the cycle goes to step 12, which comprises the execution of the program, going then to step 13, which determines the prize to be given. In case the cycle continues to step 14, which is a bonus option, the process then proceeds to printing of the said bonus in step 19 and then continues to step 21, which determines whether the money inserted is exact or not. If the money amount is not exact, the cycle continues to step 22, which delivers the change and goes on to step 24. If the inserted money is correct, the cycle continues to step 24 to deliver the selected product and the cycle then ends at step 25.

If a product with a bonus is determined at step 13 (step 15), the cycle continues up to step 23, where the inserted money is reimbursed, the product is then dispensed at step 24 and the cycle ends at step 25.

As another possible alternative in step 13, a higher prize can be obtained (step 16), in which case the cycle continues with the printing of a bonus at step 20 and then continues to step 23 for the reimbursement of money, and then to step 24 for delivery of the selected product, the cycle finally ending at step 25. As an alternative to step 20, instead of proceeding to step 23, the cycle can continue at step 21 to determine whether the inserted money has been exact or not.

If step 13 determines that the cycle is to continue at step 17, the same defines a new execution of the program, where the cycle goes back to step 12 in order to re-start the cycle of device 1. Finally, step 13 can have the option to continue the cycle at step 18 where a prize is delivered, thereby causing the cycle to continue at step 21 up to the end of the cycle at step 25.

It is important to note that prizes at steps 14, 15, 16, 17 and 18 are only example of prizes, which can be configured in any possible manner, depending on the kind of machine in which said device 1 is to be applied.

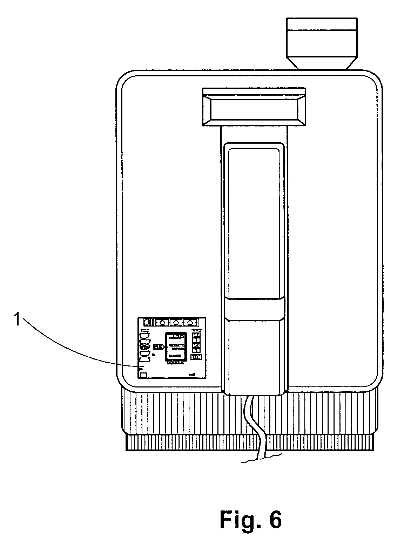

As an example of application of the said device 1 of the present invention, the same can be applied on a dispensing machine, such as shown in Figure 5. In fact, in this particular case device 1 of the present invention is applied to a dispensing machine 7. At the time the user inserts the money in said dispensing machine 7, he selects the desired product thereby simultaneously actuating device 1. Prior to delivery of the product, in case the combination generated by the algorithm defines a prize, the user can take the prize and then withdraw the selected product. Said prize can be previously configured, i.e., the same can be a product equal to the acquired by the original purchase, a percentage of the value inserted for the second purchase, etc. It is to be noted that options for prizes delivered by device 1 can be made according to needs of the machine owner.

Figure 5 shows an alternative application of device 1, where in this particular case the same is applied on a public telephone. In fact, the telephone presents a single product with different values according to the kind of phone call to be made. The service can be paid, as already known, by coins, tokens, debit or credit cards, intelligent cards and the like. The user inserts the money and uses the service, when the use finishes using the service, he hangs the handset and device 1 is automatically actuated and executes its internal program, the result of which being then indicated. Said result can be indicated in two manners. If the service is paid by credit or debit card, the device reports the prize discount to the phone or collecting mechanism, which estimates the balance to be paid. Debiting is made for the balance, or the total and a bonus. In case the service is paid in cash (coins or tokens), device 1 informs the prize discount to the telephone or collection mechanism, which estimates the balance to be paid and reimburses money if necessary once the operations comes to an end.

It is to be further noted that said device 1 can be programmed in situ by locating a program through means such as a portable computer or the like, or it can be also programmed at the place of assembly thereof, thereby allowing configurations to be made as required by use, once the device has been installed in, for example, a dispensing machine

## Claims

1. An advertising device for use on product dispensing machines, such as food, beverages and the like, wherein the said device is **characterized by** comprising a prize viewing means, at least an actuating means and a dispensing slot, said actuating means being defined by a push button, and where the device further comprises an actuating cycle consisting in a random routine for delivering prizes.

2. A device according to claim 1, **characterized in that** said push button represents a device actuating means.

3. A device according to claim 1, **characterized in that** said actuating cycle is commanded by an algorithm.

4. A device according to claims 1 to 3, **characterized in that** said device comprises a memory housing said algorithm.

5. A device according to claim 3, **characterized in that** said device is programmed in situ by loading the algorithm through a means such as a portable computer or the like.

6. A method for delivering prizes in product dispensing machines by the use of the device of claim 1, **characterized in that** the same comprises the steps of:
a) connecting the device to said dispensing machine;
b) inserting the desired amount of money in said dispensing machine;
c) selecting the product offered;
d) actuating the device
e) taking the product from said dispensing machine;
f) checking whether there is any prize in said device;
g) taking the prize in case there is one;
h) taking (if any) the change from said dispensing machine;

7. A method according to claim 6, **characterized in that** the action is canceled between steps a) and b), depending on the amount inserted.

8. A method for actuating the device of claim 1, **characterized in that** it comprises the steps of:
a) starting the program of said device;
b) configuring the raffle-like game variables as required by the dispensing machine where the said device is applied;
c) selecting one of the values set in push buttons;
d) actuating the push―button actuator of the program;
e) looking at the viewing means or screen;
f) checking the existence of any prize.
